# FASCICULE DE BREVET EUROPEEN

(11) **EP 3 633 876 B1**
(45) Date de publication et mention de la délivrance du brevet: **07.06.2023**
(21) Numéro de dépôt: 19201414.0
(22) Date de dépôt: 04.10.2019
(51) Int. Cl.: H04B 7/185

(54) **SYSTÈME DE TRAITEMENT ET D'OBSERVATION POUR LA MISE EN OEUVRE DE L'OBSERVATION DE LA TERRE, ARCHITECTURE D'OBSERVATION ET PROCÉDÉ D'OBSERVATION ASSOCIÉS**
VERARBEITUNGS- UND BEOBACHTUNGSSYSTEM FÜR DIE UMSETZUNG DER ERDBEOBACHTUNG, ENTSPRECHENDER BEOBACHTUNGSAUFBAU UND ENTSPRECHENDES BEOBACHTUNGSVERFAHREN
PROCESSING AND OBSERVATION SYSTEM FOR CARRYING OUT OBSERVATION OF THE EARTH, ASSOCIATED OBSERVATION ARCHITECTURE AND OBSERVATION METHOD

(30) Priorité: 04.10.2018 FR 1801047
(43) Date de publication de la demande: 08.04.2020
(73) Titulaire: Thales, 92400 Courbevoie (FR)
(72) Inventeur: GAYRARD, Jean-Didier, 31037 Toulouse (FR); MARTINERIE, Francis, 31037 Toulouse (FR); OLIVE, Xavier, 31037 Toulouse (FR)
(74) Mandataire: Lavoix

(56) Documents cités:
- EP-A1- 0 627 826
- WO-A1-2018/103926
- DE-B3-102005 055 918
- US-A1- 2015 204 974
- US-A1- 2017 070 939
- US-B1- 8 320 829

## Description

La présente invention concerne un système de traitement et d'observation pour la mise en oeuvre de l'observation de la Terre.

La présente invention concerne également un procédé d'observation associé.

Selon l'état de la technique, un système d'observation de la Terre par satellite est constitué d'au moins un satellite porteur d'un instrument ou capteur apte à générer des données d'observation relative à la Terre. Ces données d'observation comprennent par exemple des images de la surface terrestre.

Le satellite est typiquement placé sur une orbite circulaire héliosynchrone à une altitude comprise entre 600 et 900 km. En outre, le système d'observation de la Terre par satellite est également constitué d'une station terrestre de télémesure typiquement placée avantageusement vers les régions polaires pour bénéficier d'une plus longue visibilité du satellite.

Les orbites circulaires héliosynchrones ont des avantages décisifs pour la télédétection.

En particulier, un satellite placé sur une telle orbite couvre toute la Terre à une altitude quasi-constante. Par ailleurs, ce satellite passe toujours à la même heure solaire locale au-dessus d'un lieu donné ce qui permet d'avoir un éclairage identique du lieu observé.

Ce dernier avantage devient un inconvénient en ce qui concerne la durée de visibilité des stations terrestres de télémesure. Le satellite n'est en visibilité d'une station terrestre de télémesure que quelques fois par jour ce qui entraine une limitation du débit de données total transmis au sol par jour.

Le manque d'opportunités de visibilité avec les stations terrestres de télémesure conduit également à une forte latence entre le moment de la génération des données d'observation par le satellite et leur transmission au sol. Dans le sens inverse, cela conduit à une forte latence entre le moment de génération de données de configuration destinées à la programmation du satellite et leur prise en compte effective. Cela réduit alors la réactivité du système.

Pour pallier ces inconvénients, plusieurs solutions sont envisageables par l'état de la technique.

Ainsi, par exemple, le débit des liaisons avec la station terrestre peut être augmenté par l'utilisation de bandes de fréquences plus hautes lorsque les liaisons sont radiofréquences, notamment la bande Ka (Kurz-above) ou par l'utilisation d'instruments de communication optique. Toutefois, cette solution ne résout pas le problème de la latence ni de la réactivité.

Une autre solution consiste à augmenter le nombre de stations terrestres et à les répartir astucieusement vers les pôles. Cette solution résout les problèmes de débit, de latence et de réactivité. Toutefois, elle est coûteuse et se heurte au besoin d'indépendance, en particulier concernant la souveraineté sur les stations terrestres distantes dans le cas de systèmes nationaux ou régionaux. En outre, la multiplication du nombre de satellites d'observation en orbite pose le problème de la saturation en nombre de liaisons simultanées pour les stations à haute latitude.

Les documents US 2017/070939 A1 et EP 0 627 826 A1 décrivent des systèmes de communication pour satellites.

La présente invention a pour but de proposer un système pour la mise en oeuvre de l'observation de la Terre permettant d'augmenter le volume total de données transmises au sol depuis les satellites ainsi que la réactivité totale du système, tout en garantissant une certaine indépendance.

À cet effet, l'invention a pour objet un système de traitement et d'observation conforme à la revendication 1.

Suivant d'autres aspects avantageux de l'invention, le système comprend une ou plusieurs des caractéristiques des revendications 2 à 8, prise(s) isolément ou suivant toutes les combinaisons techniquement possibles.

L'invention a également pour objet un procédé d'observation de la Terre conforme à la revendication 9.

Ces caractéristiques et avantages de l'invention apparaitront à la lecture de la description qui va suivre, donnée uniquement à titre d'exemple non limitatif, et faite en référence aux dessins annexés, sur lesquels :
- la figure 1 est une vue schématique d'une architecture d'observation de la Terre selon l'invention, l'architecture comportant notamment une constellation de satellites de télédétection et une constellation de satellites de télétraitement ;
- la figure 2 est une vue schématique des orbites des constellations de satellites de la figure 1, selon un premier exemple de réalisation de l'invention ;
- la figure 3 est une vue schématique des orbites des constellations de satellites de la figure 1, selon un deuxième exemple de réalisation de l'invention ;
- la figure 4 est une vue schématique d'un système de traitement et d'observation selon l'invention, le système faisant partie de l'architecture de la figure 1 ;
- la figure 5 est une vue schématique du système de traitement et d'observation selon un mode de réalisation différent de celui de la figure 4 ; et
- la figure 6 est un organigramme d'un procédé d'observation selon l'invention, le procédé étant mis en oeuvre par l'architecture de la figure 1.

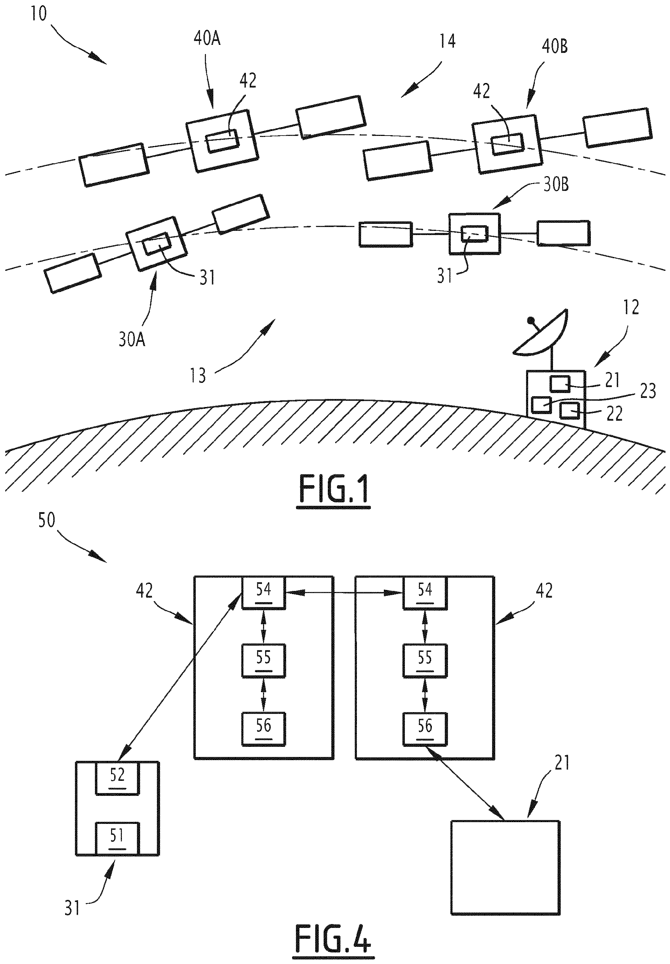

L'architecture d'observation 10 de la figure 1 permet d'observer la Terre depuis l'espace en générant des données d'observation relatives à la Terre. Les données d'observation sont générées par des satellites faisant partie de cette architecture et sont transmises ensuite au sol comme cela sera expliqué par la suite.

Selon un exemple de réalisation, les données d'observation correspondent à des images de la surface terrestre prises à partir des satellites.

Selon d'autres exemples, les données d'observation correspondent à tout autre type d'information observable depuis l'espace comme par l'exemple la température de la surface, l'humidité, les vents, etc.

En référence à la figure 1, l'architecture d'observation 10 comporte au moins une station au sol 12, une constellation de satellites de télédétection 13 et une constellation de satellites de télétraitement 14.

La station au sol 12 est par exemple disposée de manière fixe ou mobile sur la surface terrestre, par exemple à proximité d'une région polaire.

La station au sol 12 comprend notamment un module terrestre de communication 21 permettant de communiquer avec les satellites de l'architecture 10 en émettant et en recevant des signaux optiques/radioélectriques. Ce module 21 sera expliqué plus en détail par la suite.

La station au sol 12 comprend en outre un module de traitement 22 apte à traiter les signaux reçus par le module terrestre de communication 21 afin d'en extraire des données, notamment des données d'observation, et à générer des signaux à transmettre via le module terrestre de communication 21 à partir de données destinées aux satellites.

La station au sol 12 comprend en outre un module réseau 23 apte à raccorder la station au sol 12 à un réseau informatique terrestre pour échanger des données par exemple avec un centre de mission ou tout autre récepteur des données issues des satellites et/ou émetteur des données destinées à ces satellites.

Le centre de mission permet par exemple de recevoir des données d'observation issues des satellites, éventuellement de traiter ces données et de les transmettre par exemple vers un ou plusieurs clients.

Le centre de mission permet en outre de générer des données de configuration destinées à un ou plusieurs satellites. Ces données de configuration permettent par exemple de corriger l'orbite d'un satellite et/ou de modifier sa mission, et sont transmises vers ce satellite via la station au sol 12 comme cela sera expliqué par la suite.

La constellation de satellites de télédétection 13 est composée de satellites de télédétection, seuls deux satellites de télédétection 30A, 30B étant illustrés sur la figure 1.

Toutefois, il doit être compris que dans un cas général, le nombre de satellites de télédétection est choisi notamment en fonction de la mission assurée par ces satellites. Ainsi, ce nombre peut par exemple varier de 1 jusqu'un nombre de satellites assurant la couverture totale de la surface terrestre.

Chaque satellite de télédétection 30A, 30B est placé sur une orbite terrestre basse, par exemple héliosynchrone.

Par une orbite terrestre basse, on entend une orbite terrestre d'altitude inférieure ou égale à 2 000 km.

De préférence, selon l'invention, les satellites de télédétection 30A, 30B sont placés sur des orbites basses d'altitude inférieure à 1 000 km, par exemple des orbites héliosynchrones à des heures locales comprises entre 10 heures et 14 heures.

Chaque satellite de télédétection 30A, 30B permet d'acquérir des données d'observation relatives à la Terre pour transmettre par la suite ces données vers la station au sol 12. Pour ce faire, chaque satellite de télédétection 30A, 30B comprend un premier ensemble de dispositifs électroniques 31 embarqué dans ce satellite et expliqué en détail par la suite.

La constellation de satellites de télétraitement 14 est composée de satellites de télétraitement 40A, 40B permettant notamment d'assurer la transmission des données d'observation issues des satellites de télédétection 30A, 30B vers la station au sol 12. Pour ce faire, chaque satellite de télétraitement 40A, 40B comporte un deuxième ensemble de dispositifs électroniques 42 expliqué plus en détail par la suite.

Comme dans le cas précédent, seuls deux satellites de télétraitement 40A, 40B sont illustrés sur la figure 1.

Dans le cas général, le nombre de satellites de télétraitement 40A, 40B ainsi que leurs orbites sont choisis afin d'assurer de façon constante la visibilité des satellites de télédétection 30A, 30B par au moins l'un des satellites de télétraitement 40A, 40B.

Selon un exemple de réalisation de l'invention, les satellites de télétraitement 40A, 40B sont au nombre de 3.

Selon l'invention, chaque satellite de télétraitement 40A, 40B est placé sur une orbite moyenne, avantageusement héliosynchrone.

Par une orbite terrestre moyenne, connue également sous l'acronyme anglais « MEO » (« Medium Earth Orbit »), on entend une orbite terrestre d'altitude comprise entre 2 000 km et 35 786 km.

Pour assurer une visibilité constante des satellites de télédétection 30A, 30B, le phasage, c'est-à-dire l'écart angulaire, entre les orbites des satellites de télétraitement 40A, 40B est ajusté.

Par ailleurs, pour assurer une visibilité optimale de la station au sol 12, l'heure locale de l'orbite de chaque satellite de télétraitement 40A, 40B est choisie différente et comprise entre 9 heures et 15 heures.

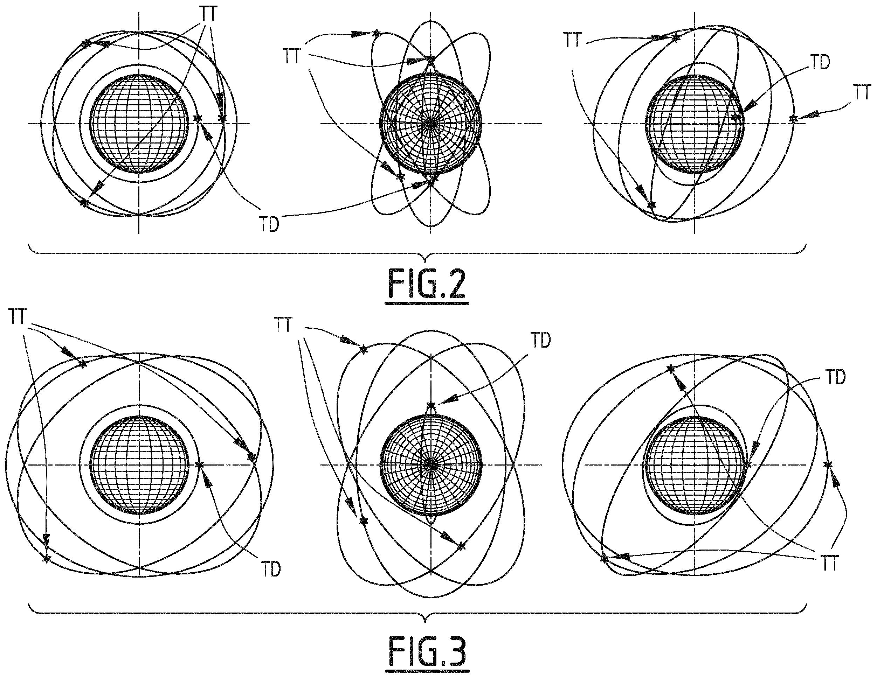

La figure 2 illustre un exemple de positions de différentes orbites l'une par rapport à l'autre pour trois satellites de télétraitement repérés par la référence « TT » sur cette figure et un satellite de télédétection repéré par la référence « TD » sur cette figure.

En particulier, selon cet exemple, les satellites de télétraitement TT sont disposés sur des orbites moyennes différentes d'une même altitude égale sensiblement à 2 723 km.

La figure 3 illustre un autre exemple de positions de différentes orbites l'une par rapport à l'autre également pour trois satellites de télétraitement repérés par la référence « TT » sur cette figure et un satellite de télédétection repéré par la référence « TD » sur cette figure.

Selon cet exemple, les satellites de télétraitement TT sont disposés sur des orbites moyennes différentes d'une même altitude égale sensiblement à 4 182 km.

Le module terrestre de communication 21 de la station au sol 12, les premiers ensembles de dispositifs électroniques 31 des satellites de télédétection 30A, 30B et les deuxièmes ensembles de dispositifs électroniques 42 des satellites de télétraitement 40A, 40B forment un système de traitement et d'observation 50 pour la mise en oeuvre de l'observation de la Terre.

Ce système 50 selon un mode de réalisation est illustré en détail sur la figure 4.

En particulier, selon ce mode de réalisation, les premiers ensembles de dispositifs électroniques 31 des satellites de télédétection 30A, 30B sont sensiblement analogues entre eux et les deuxièmes ensembles de dispositifs électroniques 42 des satellites de télétraitement 40A, 40B sont également sensiblement analogues entre eux.

Pour simplifier la description, le système 50 selon ce mode de réalisation sera expliqué en référence à un seul premier ensemble de dispositifs électroniques 31, par exemple celui du satellite de télédétection 30A.

En référence à la figure 4, le premier ensemble de dispositifs électroniques 31 comprend un module de télédétection 51 et un premier module de communication proximale 52.

Le module de télédétection 51 est apte à générer des données d'observation relatives à la Terre. Ce module 51 présente par exemple un dispositif optique tel qu'une caméra par exemple, apte à prendre des images de la surface terrestre.

Le premier module de communication proximale 52 présente une antenne ou un terminal optique et des composants électroniques associés aptes à établir une liaison de communication avec un module de communication proximale analogue d'un autre satellite. Cette liaison de communication se présente sous la forme d'une liaison bidirectionnelle optique et/ou radiofréquence.

Selon un exemple de réalisation, le premier module de communication proximale 52 correspond à un terminal de type ISL (de l'anglais « Inter-Satellite Link ») connu en soi.

Chaque deuxième ensemble de dispositifs électroniques 42 comprend un deuxième module de communication proximale 54, un module de traitement 55 et un module de communication distante 56.

Chaque deuxième module de communication proximale 54 est apte à établir une liaison bidirectionnelle optique et/ou radiofréquence avec un module de communication proximale analogue embarqué dans un autre satellite.

En particulier, chaque deuxième module de communication proximale 54 est apte à communiquer avec le premier module de communication proximale 52 du premier ensemble de dispositifs électroniques 31 pour notamment recevoir des données d'observation issues de ce module 52, et transmettre des données de configuration vers ce module, lorsque le satellite de télédétection 30A est visible par le satellite 40A, 40B correspondant.

Le deuxième module de communication proximale 54 de l'un des deuxièmes ensembles de dispositifs électroniques 42 est apte en outre à communiquer avec le deuxième module de communication proximale 54 d'un autre deuxième ensemble de dispositifs électroniques 42, lorsque les satellites de télétraitement 40A, 40B correspondants sont visibles l'un par l'autre.

De manière générale, par « visibilité » d'un satellite par un autre, on entend une position respective de ces satellites leur permettant de communiquer via la liaison établie entre leurs modules de communication proximale.

Selon une variante de réalisation, le deuxième module de communication proximale 54 de chaque deuxième ensemble de dispositifs électroniques 42 se présente sous la forme de deux unités indépendantes, l'une étant configurée pour communiquer avec le premier module de communication proximale 52 du premier ensemble de dispositifs électroniques 31 et l'autre étant configurée pour communiquer avec l'unité analogue de l'autre deuxième ensemble de dispositifs électroniques.

Chaque module de traitement 55 permet de traiter notamment des données reçues par le deuxième module de communication proximale 54 correspondant.

En particulier, lorsqu'il s'agit de données d'observation reçues par le deuxième module de communication proximale 54 correspondant et issues du premier module de communication proximale 52 du premier ensemble de dispositifs électroniques 31, chaque module de traitement 55 est apte à effectuer au moins une opération choisie dans la liste comprenant au moins :
- le stockage desdites données dans une mémoire ;
- la compression desdites données ;
- le cryptage/décryptage desdites données ;
- l'extraction d'informations synthétiques ;
- la détection de nuages dans les images ;
- l'élaboration de données de configuration destinées à au moins un satellite de télédétection 30A, 30B et permettant d'optimiser l'observation de la Terre.

Selon un exemple avantageux de réalisation de l'invention, les modules de traitement 55 des deuxièmes ensembles de dispositifs électroniques 42 différents sont aptes à traiter les mêmes données d'observation en appliquant des opérations différentes.

En variante, chaque module de traitement 55 est apte à traiter une partie de données d'observation qui n'a pas été encore traitée par un autre module de traitement.

Chaque module de traitement 55 se présente par exemple sous la forme d'un calculateur comportant une mémoire apte à stocker une pluralité de logiciels et un processeur apte à exécuter ces logiciels.

En variante ou en complément, chaque module de traitement 55 se présente au moins partiellement sous la forme d'un circuit logique programmable de type FPGA (de l'anglais « Field-Programmable Gate Array ») ou de type ASIC (de l'anglais « Application Specific Integrated Component ») programmé pour exécuter les fonctions correspondantes de ce module de traitement 55.

Chaque module de communication distante 56 présente une antenne ou un terminal optique et des composants électroniques associés aptes à établir une liaison de communication avec le module terrestre de communication 21. Cette liaison de communication se présente sous la forme d'une liaison bidirectionnelle optique et/ou radiofréquence.

Selon un exemple de réalisation, chaque module de communication distante 56 correspond à un terminal de type TMI (acronyme de « Télémesure Instrument ») connu en soi.

Finalement, le module terrestre de communication 21 présente également une antenne ou un terminal optique et des composants électroniques associés aptes à établir une liaison bidirectionnelle optique et/ou radiofréquence avec chaque module de communication distante 56 et avec tout autre module de communication analogue embarqué dans un satellite lorsque ce satellite est visible par la station au sol 12.

Ainsi, par « visibilité » d'un satellite par une station au sol, on entend une position respective de ces objets leur permettant de communiquer via la liaison établie entre le module de communication distante du satellite et le module terrestre de communication de la station au sol.

Dans le système de traitement et d'observation 50 selon d'autres modes de réalisation, au moins un premier et/ou au moins un deuxième ensemble de dispositifs électroniques diffère(nt) respectivement du premier et/ou du deuxième ensembles de dispositifs électroniques 31, 42 décrits précédemment, par la présence d'un ou de plusieurs composants supplémentaires.

Ainsi, par exemple, selon un mode de réalisation, au moins un premier ensemble de dispositifs électroniques comprend en outre un module de communication distante analogue au module de communication distante 56 décrit précédemment. Ce module est donc apte à communiquer directement avec le module terrestre de communication 21 lorsque le satellite l'embarquant est visible par la station au sol 12.

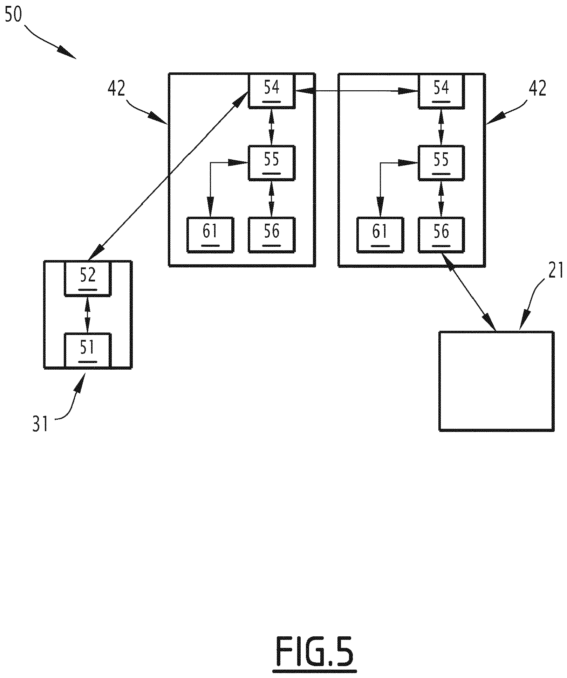

Selon encore un mode de réalisation illustré sur la figure 5, au moins un ou chaque deuxième ensemble de dispositifs électroniques comprend en outre un module de télédétection 61 analogue au module de télédétection 51 décrit précédemment. Ce module permet donc de générer également des données d'observation relatives à la Terre. Ces données d'observation sont par exemple traitées par le module de traitement 55 du deuxième ensemble de dispositifs électroniques 42 correspondant et sont transmises ensuite vers le module de télédétection 51 embarqué dans un satellite de télédétection, sous la forme de données de configuration. Dans ce cas, ce dernier module de télédétection 51 est configuré pour exécuter ces données de configuration reçues pour optimiser son observation.

Ainsi, par exemple, lorsque les données d'observation correspondent à des images de la surface terrestre, le module de télédétection d'un satellite de télétraitement est apte à prendre des images de portions importantes de la surface terrestre de fait de son altitude élevée. Puis, le module de traitement embarqué dans ce satellite est apte à traiter ces images afin de définir par exemple des points d'intérêt. Les positions de ces points d'intérêt peuvent par exemple être envoyées vers un satellite de télédétection survolant ces points. Le module de télédétection de ce dernier satellite peut donc prendre des images de ces points avec une résolution supérieure, de fait de sa faible altitude.

Selon encore un autre mode de réalisation, le système de traitement et d'observation 50 comprend plusieurs modules terrestres de communication analogues au module terrestre de communication 21 décrit précédemment. Ces modules sont intégrés par exemple dans des stations au sol différentes disposées dans des endroits géographiques différents. Dans ce cas, chaque satellite comportant un module de communication distante est apte à communiquer avec chacun de ces modules terrestres de communication lorsque ce satellite est visible par la station correspondante.

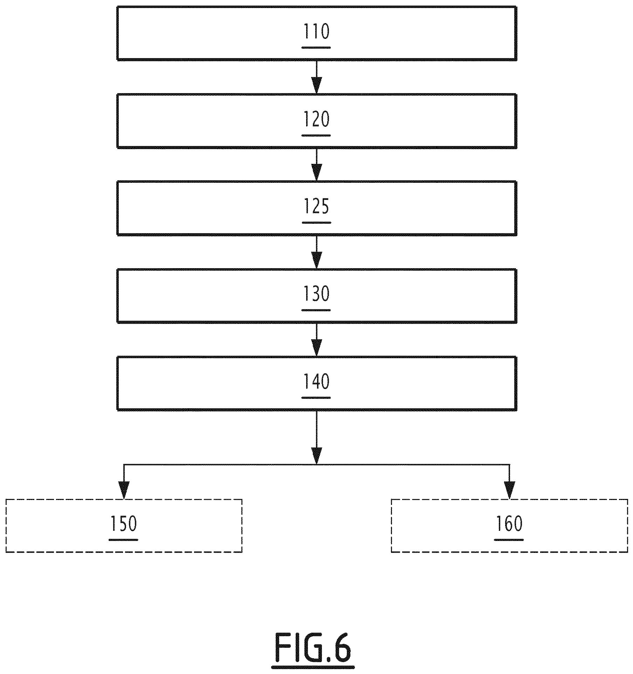

Le procédé d'observation de la Terre mis en oeuvre par l'architecture d'observation selon l'invention sera désormais expliqué en référence à la figure 6 présentant un organigramme de ses étapes.

Lors d'une étape initiale 110, le module de télédétection 51 de l'un des satellites de télédétection, par exemple du satellite 30A, génère des données d'observation relatives à la Terre.

Comme dit précédemment, ces données peuvent par exemple comprendre des images de la surface terrestre.

Puis, lors de l'étape suivante 120, dans le cas où le satellite 30A est équipé d'un module de communication distante et lorsque le satellite 30A est visible par la station au sol 12, ce module de communication distante envoie directement les données d'observation vers la station au sol 12.

Dans le cas contraire, le satellite 30A est visible par l'un des satellites de télétraitement, par exemple par le satellite 40A. Dans ce cas, le premier module de communication proximale 52 envoie les données d'observation vers le deuxième module de communication proximale 54 du satellite 40A.

Lors de l'étape suivante 125, le module de traitement 55 du satellite de télétraitement 40A traite les données d'observation reçues par le deuxième module de communication proximale 54. Ce traitement est effectué notamment en utilisant l'une des opérations décrites précédemment.

En variante, lors de cette étape, ce module de traitement 55 traite seulement une partie de données d'observation ou n'effectue aucun traitement des données d'observation reçues.

Lors de l'étape suivante 130, le module de communication distante 56 du satellite 40A transmet les données d'observation traitées vers le module terrestre de communication 21 lorsque la station 12 est visible par le satellite 40A.

Dans le cas contraire, le module de traitement 55 stocke les données d'observation traitées dans sa mémoire jusqu'à ce que la station au sol 12 devienne visible par le satellite 40A.

En variante, lors de cette étape, le deuxième module de communication proximale 54 du satellite 40A transmet les données d'observation traitées vers le deuxième module de communication proximale 54 d'un autre satellite de télétraitement, par exemple du satellite 40B, qui est visible par la station au sol ou qui sera visible par cette station dans un intervalle temporel plus court que celui du satellite 40A.

Dans ce cas, lorsque le deuxième module de communication proximale 54 du satellite 40B reçoit ces données d'observation, le module de traitement 55 de ce satellite traite éventuellement ces données avant de les transmettre à la station au sol ou au deuxième module de communication proximale 54 d'un autre satellite de télétraitement.

En particulier, le module de traitement 55 du satellite 40B traite par exemple les données d'observation en appliquant une opération qui n'a pas été encore appliquée à ces données et/ou traite une partie de données d'observation qui n'a été encore traitée par aucun autre module de traitement.

En variante, lors de cette étape, le module de traitement 55 du satellite 40B traite l'ensemble des données de traitement lorsque notamment elles n'ont pas été traitées par le module de traitement 55 du satellite 40A.

Lors de l'étape suivante 140, le module terrestre de communication 21 de la station au sol 12 reçoit les données d'observation et les transmet par exemple vers le centre de mission via le réseau informatique terrestre.

Lorsqu'au moins l'un des satellites de télétraitement comprend en outre un module de télédétection, le procédé comprend en outre une étape optionnelle 150 de précision lors de laquelle les données d'observation acquises par ce module sont utilisées par le module de télédétection d'un satellite de télédétection comme cela est expliqué précédemment.

Par ailleurs, le procédé comprend en outre une étape optionnelle 160 de configuration lors de laquelle la station au sol 12 transmet à l'un des satellites de télédétection des données de configuration qui empruntent alors le chemin inverse à celui des données d'observation.

On conçoit alors que l'invention présente un certain nombre d'avantages.

Tout d'abord, l'invention permet d'assurer une visibilité suffisamment longue de la station terrestre soit par un satellite de télédétection directement soit via un satellite de télétraitement pour augmenter le volume total de données pouvant être transmises au sol.

De plus, ces données peuvent être traitées directement par un satellite de télétraitement ce qui permet de réduire le volume de ces données par exemple en les comprimant ou en supprimant des données inutiles.

En outre, les satellites de télétraitement peuvent fournir aux satellites de télédétection des données optimisant leur observation ce qui permet de réduire également le volume de données transmises au sol.

La réactivité du système se trouve également améliorée notamment par la réduction de la durée d'anticipation nécessaire pour programmer une mission et de la durée de transmission des données vers l'utilisateur.

Finalement, le service de télécommunication et de télétraitement peut éventuellement être offert à un satellite déjà existant sur une orbite moyenne d'un opérateur tiers.

## Revendications

1. Système de traitement et d'observation (50) pour la mise en oeuvre de l'observation de la Terre, le système (50) comprenant :
- au moins un module terrestre de communication (21) installé dans une station au sol (12) ;
- un premier ensemble de dispositifs électroniques (31) embarqué dans un satellite de télédétection (30A, 30B) disposé sur une orbite terrestre basse et comportant un module de télédétection (51) apte à observer la Terre et à générer des données d'observation relatives à cette observation et destinées à la station au sol (12) ;
- au moins deux deuxièmes ensembles de dispositifs électroniques (42), chaque deuxième ensemble (42) étant embarqué dans un satellite de télétraitement (40A, 40B) disposé sur une orbite terrestre moyenne héliosynchrone et comportant un module de communication distante (56) apte à communiquer avec le module terrestre de communication (21) ;
le premier ensemble de dispositifs électroniques (31) comportant en outre un premier module de communication proximale (52) et chaque deuxième ensemble de dispositifs électroniques (42) comportant en outre un deuxième module de communication proximale (54), lesdits modules de communication proximale étant aptes à communiquer entre eux ;
le premier module de communication proximale (52) étant apte à transmettre les données d'observation générées par le module de télédétection (51) vers le deuxième module de communication proximale (54) au moins de l'un des deuxièmes ensembles de dispositifs électroniques (42) ;
le deuxième module de communication proximale (54) au moins de l'un des deuxièmes ensembles de dispositifs électroniques (42) étant apte à transmettre les données d'observation reçues au deuxième module de communication proximale (54) de l'autre deuxième ensemble de dispositifs électroniques (42) ;
chaque deuxième ensemble de dispositifs électroniques (42) comportant en outre un module de traitement (55) apte à traiter les données d'observation reçues par le deuxième module de communication proximale (54) de cet ensemble de dispositifs électroniques (42) pour les transmettre au module terrestre de communication (21) via le module de communication distante (56) de cet ensemble de dispositifs électroniques (42) ou au deuxième module de communication proximale (54) de l'autre deuxième ensemble de dispositifs électroniques (42) via le deuxième module de communication proximale (54) de cet ensemble de dispositifs électroniques (42) ;
dans lequel au moins l'un des deuxièmes ensembles de dispositifs électroniques (42) comporte en outre un module de télédétection (61) apte à observer la Terre et à générer des données d'observation relatives à cette observation ;
le module de traitement (55) de ce deuxième ensemble de dispositifs électroniques (42) étant apte à traiter ces données d'observation pour élaborer des données de configuration destinées à au moins un satellite de télédétection (30A, 30B) et permettant d'optimiser l'observation de la Terre ;
le deuxième module de communication proximale (54) de ce deuxième ensemble de dispositifs électroniques (42) étant apte à transmettre ces données de configuration au premier module de communication proximale (52) du premier ensemble de dispositifs électroniques (31),
le module de télédétection (51) du premier ensemble de dispositifs électroniques (31) étant apte à exécuter ces données de configuration reçues par le premier module de communication proximale (52) pour optimiser l'observation de la Terre.

2. Système (50) selon la revendication 1, dans lequel le module de traitement (55) de chaque deuxième ensemble de dispositifs électroniques (42) est apte à traiter les données d'observation en faisant au moins une opération choisie dans la liste comprenant au moins :
- le stockage desdites données dans une mémoire ;
- la compression desdites données ;
- le cryptage/décryptage desdites données ;
- l'extraction d'informations synthétiques ;
- la détection de nuages lorsque les données d'observation correspondent à des images de la surface terrestre ;
- l'élaboration de données de configuration destinées à au moins un satellite de télédétection (30A, 30B) et permettant d'optimiser l'observation de la Terre.

3. Système (50) selon la revendication 2, dans lequel le module de traitement (55) de chaque deuxième ensemble de dispositifs électroniques (42) est apte à traiter des données d'observation déjà traitées par le module de traitement (55) de l'autre deuxième ensemble de dispositifs électroniques (42), en appliquant une opération différente.

4. Système (50) selon l'une quelconque des revendications précédentes, dans lequel le module terrestre de communication (21) est apte à transmettre des données de configuration destinées au satellite de télédétection (30A, 30B), le module de communication distante (56) de chaque deuxième ensemble de dispositifs électroniques (42) étant apte à recevoir ces données de configuration pour les transmettre au premier module de communication proximale (52) ou au deuxième module de communication proximale (54) de l'autre deuxième ensemble de dispositifs électroniques (42), via le deuxième module de communication proximale (54).

5. Système (50) selon l'une quelconque des revendications précédentes, dans lequel le premier module de communication proximale (52) et chaque deuxième module de communication proximale (54) sont aptes à former une liaison bidirectionnelle optique et/ou radiofréquence pour communiquer entre eux.

6. Système (50) selon l'une quelconque des revendications précédentes, dans lequel le module terrestre de communication (21) et le module de communication distante (56) sont aptes à former une liaison bidirectionnelle optique et/ou radiofréquence pour communiquer entre eux.

7. Système (50) selon l'une quelconque des revendications précédentes, comportant en outre un autre premier ensemble de dispositifs électroniques analogue audit premier ensemble de dispositifs électroniques (31), cet autre premier ensemble de dispositifs électroniques étant embarqué dans un satellite de télédétection (30A, 30B) disposé sur une orbite terrestre basse et différent dudit satellite de télédétection (30A, 30B).

8. Système (50) selon l'une quelconque des revendications précédentes, dans lequel les orbites des satellites de télétraitement (40A, 40B) sont telles qu'au moins une condition suivante soit remplie :
- l'heure locale de chaque orbite est différente et comprise entre 9 heures et 15 heures ;
- le phasage entre les orbites est ajusté pour assurer une visibilité constante du ou de chaque satellite de télédétection (30A, 30B).

9. Procédé d'observation de la Terre mis en oeuvre par une architecture (10) d'observation de la Terre, ladite architecture comprenant:
- au moins une station au sol (12) comportant un module terrestre de communication (21) ;
- un satellite de télédétection (30A, 30B) disposé sur une orbite terrestre basse et comportant un premier ensemble de dispositifs électroniques (31) comportant un module de télédétection (51) apte à observer la Terre et à générer des données d'observation relatives à cette observation et destinées à la station au sol (12) ;
- deux satellites de télétraitement (40A, 40B), chaque satellite de télétraitement étant (40A, 40B) disposé sur une orbite terrestre moyenne héliosynchrone et comportant un deuxième ensemble de dispositifs électroniques (42) comportant un module de communication distante (56) apte à communiquer avec le module terrestre de communication (21) ;
le premier ensemble de dispositifs électroniques (31) comportant en outre un premier module de communication proximale (52) et chaque deuxième ensemble de dispositifs électroniques (42) comportant en outre un deuxième module de communication proximale (54), lesdits modules de communication proximale étant aptes à communiquer entre eux ;
le premier module de communication proximale (52) étant apte à transmettre les données d'observation générées par le module de télédétection (51) vers le deuxième module de communication proximale (54) au moins de l'un des deuxièmes ensembles de dispositifs électroniques (42) ;
le deuxième module de communication proximale (54) au moins de l'un des deuxièmes ensembles de dispositifs électroniques (42) étant apte à transmettre les données d'observation reçues au deuxième module de communication proximale (54) de l'autre deuxième ensemble de dispositifs électroniques (42) ;
chaque deuxième ensemble de dispositifs électroniques (42) comportant en outre un module de traitement (55) apte à traiter les données d'observation reçues par le deuxième module de communication proximale (54) de cet ensemble de dispositifs électroniques (42) pour les transmettre au module terrestre de communication (21) via le module de communication distante (56) de cet ensemble de dispositifs électroniques (42) ou au deuxième module de communication proximale (54) de l'autre deuxième ensemble de dispositifs électroniques (42) via le deuxième module de communication proximale (54) de cet ensemble de dispositifs électroniques (42) ;
dans lequel au moins l'un des deuxièmes ensembles de dispositifs électroniques (42) comporte en outre un module de télédétection (61) apte à observer la Terre et à générer des données d'observation relatives à cette observation ;
le module de traitement (55) de ce deuxième ensemble de dispositifs électroniques (42) étant apte à traiter ces données d'observation pour élaborer des données de configuration destinées à au moins un satellite de télédétection (30A, 30B) et permettant d'optimiser l'observation de la Terre ;
le deuxième module de communication proximale (54) de ce deuxième ensemble de dispositifs électroniques (42) étant apte à transmettre ces données de configuration au premier module de communication proximale (52) du premier ensemble de dispositifs électroniques (31),
le module de télédétection (51) du premier ensemble de dispositifs électroniques (31) étant apte à exécuter ces données de configuration reçues par le premier module de communication proximale (52) pour optimiser l'observation de la Terre,
le procédé comportant les étapes suivantes :
- génération de données d'observation relatives à la Terre par le module de télédétection (51) du deuxième ensemble de dispositifs électroniques (42);
- traitement, par le module de traitement (55) du deuxième ensemble de dispositifs électroniques (42), des données d'observation générées;
- transmission des données d'observation traitées, sous la forme de données de configuration, vers le module de télédétection (51) embarqué dans un satellite de télédétection (30A, 30B) ;
- génération (110) de données d'observation relatives à la Terre par le module de télédétection (51) de l'un des satellites de télédétection (30A, 30B) ;
- envoie (120) par le premier module de communication proximale (52) des données d'observation vers le deuxième module de communication proximale (54) de l'un des deuxièmes ensembles de dispositifs électroniques (42) ;
- traitement (125) par le module de traitement (55) des données d'observation reçues par le deuxième module de communication proximale (54) dudit deuxième ensemble de dispositifs électroniques (42) ;
- transmission (130) des données d'observation traitées par le module de traitement (55) dudit deuxième ensemble de dispositifs électroniques (42) vers le module terrestre de communication (21) ou vers le deuxième module de communication proximale (54) de l'autre deuxième ensemble de dispositifs électroniques (42).

## Patentansprüche

1. Verarbeitungs- und Beobachtungssystem (50) zur Durchführung der Beobachtung der Erde, das System (50) umfassend:
- mindestens ein Bodenkommunikationsmodul (21), das in einer Bodenstation (12) installiert ist;
- eine erste Einheit von elektronischen Vorrichtungen (31), die an Bord eines Fernerkundungssatelliten (30A, 30B) ist, der auf einer niedrigen Erdumlaufbahn angeordnet ist, umfassend ein Fernerkundungsmodul (51), das geeignet ist, um die Erde zu beobachten und Beobachtungsdaten in Bezug auf diese Beobachtung zu erzeugen und die für die Bodenstation (12) bestimmt sind;
- mindestens zwei zweite Einheiten von elektronischen Vorrichtungen (42), wobei jede zweite Einheit (42) an Bord eines Fernverarbeitungssatelliten (40A, 40B) ist, der auf einer mittleren sonnensynchronen Erdumlaufbahn angeordnet ist und umfassend ein Fernkommunikationsmodul (56), das geeignet ist, um mit dem Bodenkommunikationsmodul (21) zu kommunizieren;
die erste Einheit von elektronischen Vorrichtungen (31) ferner umfassend ein erstes proximales Kommunikationsmodul (52) und jede zweite Einheit von elektronischen Vorrichtungen (42) ferner umfassend ein zweites proximales Kommunikationsmodul (54), wobei die proximalen Kommunikationsmodule in der Lage sind, untereinander zu kommunizieren;
wobei das erste proximale Kommunikationsmodul (52) geeignet ist, die von dem Fernerkundungsmodul (51) erzeugten Beobachtungsdaten an das zweite proximale Kommunikationsmodul (54) von mindestens einer der zweiten Einheiten von elektronischen Vorrichtungen (42) zu übertragen;
wobei das zweite proximale Kommunikationsmodul (54) von mindestens einem der zweiten Einheiten von elektronischen Vorrichtungen (42) geeignet ist, um die empfangenen Beobachtungsdaten an das zweite proximale Kommunikationsmodul (54) der anderen zweiten Einheit von elektronischen Vorrichtungen (42) zu übertragen;
jede zweite Einheit von elektronischen Vorrichtungen (42) ferner umfassend ein Verarbeitungsmodul (55), das die von dem zweiten proximalen Kommunikationsmodul (54) dieser Einheit von elektronischen Vorrichtungen (42) empfangenen Beobachtungsdaten verarbeiten kann, um sie über das entfernte Kommunikationsmodul (56) dieser Einheit von elektronischen Vorrichtungen (42) an das terrestrische Kommunikationsmodul (21) oder über das zweite proximale Kommunikationsmodul (54) der anderen zweiten Einheit von elektronischen Vorrichtungen (42) über das zweite proximale Kommunikationsmodul (54) dieser Einheit von elektronischen Vorrichtungen (42) an das zweite proximale Kommunikationsmodul der anderen zweiten Einheit von elektronischen Vorrichtungen (42) zu übertragen;
wobei mindestens eine der zweiten Einheiten von elektronischen Vorrichtungen (42) ferner ein Fernerkundungsmodul (61) umfasst, das geeignet ist, um die Erde zu beobachten und Beobachtungsdaten in Bezug auf diese Beobachtung zu erzeugen;
wobei das Verarbeitungsmodul (55) dieser zweiten Einheit von elektronischen Vorrichtungen (42) geeignet ist, diese Beobachtungsdaten zu verarbeiten, um Konfigurationsdaten zu erstellen, die für mindestens einen Fernerkundungssatelliten (30A, 30B) bestimmt sind und es ermöglichen, die Beobachtung der Erde zu optimieren;
wobei das zweite proximale Kommunikationsmodul (54) dieser zweiten Einheit von elektronischen Vorrichtungen (42) geeignet ist, um diese Konfigurationsdaten an das erste proximale Kommunikationsmodul (52) der ersten Einheit von elektronischen Vorrichtungen (31) zu übertragen,
das Fernerkundungsmodul (51) der ersten Einheit von elektronischen Vorrichtungen (31) geeignet ist, um diese Konfigurationsdaten auszuführen, die von dem ersten proximalen Kommunikationsmodul (52) empfangen werden, um die Beobachtung der Erde zu optimieren.

2. System (50) nach Anspruch 1, wobei das Verarbeitungsmodul (55) von jeder zweiten Einheit von elektronischen Vorrichtungen (42) geeignet ist, um die Beobachtungsdaten zu verarbeiten, indem es mindestens einen Vorgang durchführt, die ausgewählt ist aus der Liste von mindestens:
- dem Speichern der Daten in einem Speicher;
- dem Komprimieren der Daten;
- dem Verschlüsseln/Entschlüsseln der Daten;
- dem Extrahieren von zusammengefassten Informationen;
- dem Erfassen von Wolken, wenn die Beobachtungsdaten Bildern der Erdoberfläche entsprechen;
- dem Erstellen von Konfigurationsdaten, die für mindestens einen Fernerkundungssatelliten (30A, 30B) bestimmt sind und eine Optimierung der Beobachtung der Erde ermöglichen.

3. System (50) nach Anspruch 2, wobei das Verarbeitungsmodul (55) von jeder zweiten Einheit von elektronischen Vorrichtungen (42) geeignet ist, um Beobachtungsdaten zu verarbeiten, die bereits von dem Verarbeitungsmodul (55) der anderen zweiten Einheit von elektronischen Vorrichtungen (42) verarbeitet wurden, indem es einen anderen Vorgang anwendet.

4. System (50) nach einem der vorherigen Ansprüche, wobei das Bodenkommunikationsmodul (21) geeignet ist, um Konfigurationsdaten zu übertragen, die für den Fernerkundungssatelliten (30A, 30B) bestimmt sind, wobei das Fernkommunikationsmodul (56) von jeder zweiten Einheit von elektronischen Vorrichtungen (42) geeignet ist, um diese Konfigurationsdaten zu empfangen, um sie über das zweite proximale Kommunikationsmodul (54) an das erste proximale Kommunikationsmodul (52) oder das zweite proximale Kommunikationsmodul (54) der anderen zweiten Einheit von elektronischen Vorrichtungen (42) zu übertragen.

5. System (50) nach einem der vorherigen Ansprüche, wobei das erste proximale Kommunikationsmodul (52) und jedes zweite proximale Kommunikationsmodul (54) geeignet sind, um eine bidirektionale optische und/oder Radiofrequenzverbindung zu bilden, um untereinander zu kommunizieren.

6. System (50) nach einem der vorherigen Ansprüche, wobei das Bodenkommunikationsmodul (21) und das Fernkommunikationsmodul (56) geeignet sind, um eine bidirektionale optische und/oder Radiofrequenzverbindung zu bilden, um untereinander zu kommunizieren.

7. System (50) nach einem der vorherigen Ansprüche, ferner umfassend eine weitere erste Einheit von elektronischen Vorrichtungen analog zu der ersten Einheit von elektronischen Vorrichtungen (31), wobei diese weitere erste Einheit von elektronischen Vorrichtungen an Bord eines Fernerkundungssatelliten (30A, 30B) ist, der in einer niedrigen Erdumlaufbahn angeordnet ist und sich von dem Fernerkundungssatelliten (30A, 30B) unterscheidet.

8. System (50) nach einem der vorherigen Ansprüche, wobei die Umlaufbahnen der Fernverarbeitungssatelliten (40A, 40B) derart sind, dass mindestens eine der folgenden Bedingungen erfüllt ist:
- die Ortszeit jeder Umlaufbahn ist verschieden und liegt zwischen 9 Uhr und 15 Uhr;
- die Phasierung zwischen den Umlaufbahnen wird angepasst, um eine konstante Sichtbarkeit des oder jedes Fernerkundungssatelliten (30A, 30B) zu gewährleisten.

9. Verfahren zur Beobachtung der Erde, das durch eine Architektur (10) zur Beobachtung der Erde durchgeführt wird, die Architektur umfassend:
- mindestens eine Bodenstation (12) umfassend ein Bodenkommunikationsmodul (21);
- einen Fernerkundungssatelliten (30A, 30B), der auf einer niedrigen Erdumlaufbahn angeordnet ist und eine erste Einheit von elektronischen Vorrichtungen (31) mit einem Fernerkundungsmodul (51) umfasst, das geeignet ist, um die Erde zu beobachten und Beobachtungsdaten in Bezug auf diese Beobachtung zu erzeugen und die für die Bodenstation (12) bestimmt sind;
- zwei Fernverarbeitungssatelliten (40A, 40B), wobei jeder Fernverarbeitungssatellit (40A, 40B) auf einer mittleren sonnensynchronen Erdumlaufbahn angeordnet ist und eine zweite Einheit von elektronischen Vorrichtungen (42) mit einem Fernkommunikationsmodul (56) umfasst, das mit dem terrestrischen Kommunikationsmodul (21) kommunizieren kann;
die erste Einheit von elektronischen Vorrichtungen (31) ferner umfassend ein erstes proximales Kommunikationsmodul (52) und jede zweite Einheit von elektronischen Vorrichtungen (42) ferner umfassend ein zweites proximales Kommunikationsmodul (54), wobei die proximalen Kommunikationsmodule in der Lage sind, untereinander zu kommunizieren;
wobei das erste proximale Kommunikationsmodul (52) geeignet ist, die von dem Fernerkundungsmodul (51) erzeugten Beobachtungsdaten an das zweite proximale Kommunikationsmodul (54) von mindestens einer der zweiten Einheiten von elektronischen Vorrichtungen (42) zu übertragen;
wobei das zweite proximale Kommunikationsmodul (54) von mindestens einem der zweiten Einheiten von elektronischen Vorrichtungen (42) geeignet ist, um die empfangenen Beobachtungsdaten an das zweite proximale Kommunikationsmodul (54) der anderen zweiten Einheit von elektronischen Vorrichtungen (42) zu übertragen;
jede zweite Einheit von elektronischen Vorrichtungen (42) ferner umfassend ein Verarbeitungsmodul (55), das die von dem zweiten proximalen Kommunikationsmodul (54) dieser Einheit von elektronischen Vorrichtungen (42) empfangenen Beobachtungsdaten verarbeiten kann, um sie über das entfernte Kommunikationsmodul (56) dieser Einheit von elektronischen Vorrichtungen (42) an das terrestrische Kommunikationsmodul (21) oder über das zweite proximale Kommunikationsmodul (54) der anderen zweiten Einheit von elektronischen Vorrichtungen (42) über das zweite proximale Kommunikationsmodul (54) dieser Einheit von elektronischen Vorrichtungen (42) an das zweite proximale Kommunikationsmodul der anderen zweiten Einheit von elektronischen Vorrichtungen (42) zu übertragen;
wobei mindestens eine der zweiten Einheiten von elektronischen Vorrichtungen (42) ferner ein Fernerkundungsmodul (61) umfasst, das geeignet ist, um die Erde zu beobachten und Beobachtungsdaten in Bezug auf diese Beobachtung zu erzeugen;
wobei das Verarbeitungsmodul (55) dieser zweiten Einheit von elektronischen Vorrichtungen (42) geeignet ist, diese Beobachtungsdaten zu verarbeiten, um Konfigurationsdaten zu erstellen, die für mindestens einen Fernerkundungssatelliten (30A, 30B) bestimmt sind und es ermöglichen, die Beobachtung der Erde zu optimieren;
wobei das zweite proximale Kommunikationsmodul (54) dieser zweiten Einheit von elektronischen Vorrichtungen (42) geeignet ist, um diese Konfigurationsdaten an das erste proximale Kommunikationsmodul (52) der ersten Einheit von elektronischen Vorrichtungen (31) zu übertragen,
das Fernerkundungsmodul (51) der ersten Einheit von elektronischen Vorrichtungen (31) geeignet ist, um diese Konfigurationsdaten auszuführen, die von dem ersten proximalen Kommunikationsmodul (52) empfangen werden, um die Beobachtung der Erde zu optimieren.
das Verfahren umfassend die folgenden Schritte:
- Erzeugen von Beobachtungsdaten in Bezug auf die Erde durch das Fernerkundungsmodul (51) der zweiten Einheit von elektronischen Vorrichtungen (42);
- Verarbeiten, durch das Verarbeitungsmodul (55) der zweiten Einheit von elektronischen Vorrichtungen (42), der erzeugten Beobachtungsdaten;
- Übertragen der verarbeiteten Beobachtungsdaten in Form von Konfigurationsdaten an das Fernerkundungsmodul (51), das an Bord eines Fernerkundungssatelliten (30A, 30B) ist;
- Erzeugen (110) von Beobachtungsdaten in Bezug auf die Erde durch das Fernerkundungsmodul (51) eines der Fernerkundungssatelliten (30A, 30B);
- Senden (120) der Beobachtungsdaten durch das erste proximale Kommunikationsmodul (52) an das zweite proximale Kommunikationsmodul (54) einer der zweiten Einheiten von elektronischen Vorrichtungen (42);
- Verarbeiten (125) durch das Verarbeitungsmodul (55) der Beobachtungsdaten, die von dem zweiten proximalen Kommunikationsmodul (54) der zweiten Einheit von elektronischen Vorrichtungen (42) empfangen werden;
- Übertragen (130) der Beobachtungsdaten, die von dem Verarbeitungsmodul (55) der zweiten Einheit elektronischer Vorrichtungen (42) verarbeitet wurden, an das Bodenkommunikationsmodul (21) oder an das zweite proximale Kommunikationsmodul (54) der anderen zweiten Einheit elektronischer Vorrichtungen (42).

## Claims

1. A processing and observation system (50) for implementing Earth observation, the system (50) comprising:
- at least one ground communication module (21) installed in a ground station (12);
- a first set of electronic devices (31) embarked in a remote sensing satellite (30A, 30B) placed in a low Earth orbit and comprising a remote sensing module (51) capable of observing the Earth and generating observation data relating to this observation and intended for the ground station (12);
- at least two second sets of electronic devices (42), each second set (42) being embarked in a remote processing satellite (40A, 40B) disposed in a sun-synchronous medium Earth orbit and comprising a remote communication module (56) capable of communicating with the ground communication module (21);
the first set of electronic devices (31) further comprising a first proximal communication module (52) and each second set of electronic devices (42) further comprising a second proximal communication module (54), said proximal communication modules being capable of communicating with each other;
the first proximal communication module (52) being capable of transmitting the observation data generated by the remote sensing module (51) to the second proximal communication module (54) of at least one of the second sets of electronic devices (42);
the second proximal communication module (54) of at least one of the second sets of electronic devices (42) being capable of transmitting the received observation data to the second proximal communication module (54) of the other second set of electronic devices (42);
each second set of electronic devices (42) further comprising a processing module (55) capable of processing the observation data received by the second proximal communication module (54) of that set of electronic devices (42) for transmission to the ground communication module (21) via the remote communication module (56) of that set of electronic devices (42) or to the second proximal communication module (54) of the other second set of electronic devices (42) via the second proximal communication module (54) of that set of electronic devices (42);
wherein at least one of the second sets of electronic devices (42) further comprises a remote sensing module (61) capable of observing the Earth and of generating observation data relating to that observation;
the processing module (55) of this second set of electronic devices (42) being capable of processing these observation data in order to produce configuration data intended for at least one remote sensing satellite (30A, 30B) and making it possible to optimise observation of the Earth;
the second proximal communication module (54) of said second set of electronic devices (42) being capable of transmitting said configuration data to the first proximal communication module (52) of the first set of electronic devices (31),
the remote sensing module (51) of the first set of electronic devices (31) being capable of executing this configuration data received by the first proximal communication module (52) to optimise the observation of the Earth.

2. The system (50) according to claim 1, wherein the processing module (55) of each second set of electronic devices (42) is capable of processing the observation data by performing at least one operation selected from the list comprising at least:
- storing said data in a memory;
- compressing said data;
- encrypting/decrypting said data;
- extracting summary information;
- detecting clouds when the observation data correspond to images of the Earth's surface;
- the development of configuration data for at least one remote sensing satellite (30A, 30B) to optimise Earth observation.

3. The system (50) according to claim 2, wherein the processing module (55) of each second set of electronic devices (42) is capable of processing observation data already processed by the processing module (55) of the other second set of electronic devices (42), by applying a different operation.

4. The system (50) according to any one of the preceding claims, wherein the ground communication module (21) is capable of transmitting configuration data to the remote sensing satellite (30A, 30B), the remote communication module (56) of each second set of electronic devices (42) being capable of receiving such configuration data for transmission to the first proximal communication module (52) or to the second proximal communication module (54) of the other second set of electronic devices (42), via the second proximal communication module (54).

5. The system (50) according to any one of the preceding claims, wherein the first proximal communication module (52) and each second proximal communication module (54) are capable of forming a bi-directional optical and/or radio frequency link to communicate with each other.

6. The system (50) according to any one of the preceding claims, wherein the ground communication module (21) and the remote communication module (56) are capable of forming a bi-directional optical and/or radio frequency link to communicate with each other.

7. The system (50) according to any one of the preceding claims, further comprising another first set of electronic devices analogous to said first set of electronic devices (31), said another first set of electronic devices being embedded in a remote sensing satellite (30A, 30B) arranged in a low Earth orbit and different from said remote sensing satellite (30A, 30B).

8. The system (50) according to any of the preceding claims, wherein the orbits of the remote processing satellites (40A, 40B) are such that at least one of the following conditions is met:
- the local time of each orbit is different and ranges from 9 a.m. to 3 p.m;
- the phasing between orbits is adjusted to ensure constant visibility of the or each remote sensing satellite (30A, 30B).

9. A method of Earth observation implemented by an Earth observation architecture (10), said architecture comprising:
- at least one ground station (12) with a ground communication module (21);
- a remote sensing satellite (30A, 30B) placed in a low Earth orbit and comprising a first set of electronic devices (31) comprising a remote sensing module (51) capable of observing the Earth and of generating observation data relating to this observation and intended for the ground station (12);
- two remote processing satellites (40A, 40B), each remote processing satellite (40A, 40B) being arranged in a sun-synchronous medium Earth orbit and comprising a second set of electronic devices (42) comprising a remote communication module (56) capable of communicating with the Earth communication module (21);
the first set of electronic devices (31) further comprising a first proximal communication module (52) and each second set of electronic devices (42) further comprising a second proximal communication module (54), said proximal communication modules being capable of communicating with each other;
the first proximal communication module (52) being capable of transmitting the observation data generated by the remote sensing module (51) to the second proximal communication module (54) of at least one of the second sets of electronic devices (42);
the second proximal communication module (54) of at least one of the second sets of electronic devices (42) being capable of transmitting the received observation data to the second proximal communication module (54) of the other second set of electronic devices (42);
each second set of electronic devices (42) further comprising a processing module (55) capable of processing the observation data received by the second proximal communication module (54) of that set of electronic devices (42) for transmission to the ground communication module (21) via the remote communication module (56) of that set of electronic devices (42) or to the second proximal communication module (54) of the other second set of electronic devices (42) via the second proximal communication module (54) of that set of electronic devices (42);
wherein at least one of the second sets of electronic devices (42) further comprises a remote sensing module (61) capable of observing the Earth and of generating observation data relating to that observation;
the processing module (55) of this second set of electronic devices (42) being capable of processing these observation data in order to produce configuration data intended for at least one remote sensing satellite (30A, 30B) and making it possible to optimise observation of the Earth;
the second proximal communication module (54) of said second set of electronic devices (42) being capable of transmitting said configuration data to the first proximal communication module (52) of the first set of electronic devices (31),
the remote sensing module (51) of the first set of electronic devices (31) being capable of executing this configuration data received by the first proximal communication module (52) to optimise the observation of the Earth,
the method comprising the following steps:
- generating Earth-related observation data by the remote sensing module (51) of the second set of electronic devices (42);
- processing, by the processing module (55) of the second set of electronic devices (42), of the generated observation data;
- transmitting the processed observation data, in the form of configuration data, to the remote sensing module (51) embedded in a remote sensing satellite (30A, 30B);
- generating (110) Earth-related observation data by the remote sensing module (51) of one of the remote sensing satellites (30A, 30B);
- sending (120) observation data, by the first proximal communication module (52), to the second proximal communication module (54) of one of the second sets of electronic devices (42);
- processing (125), by the processing module (55), observation data received by the second proximal communication module (54) of said second set of electronic devices (42);
- transmitting (130) the observation data processed by the processing module (55) of said second set of electronic devices (42) to the ground communication module (21) or to the second proximal communication module (54) of the other second set of electronic devices (42).
